# EUROPEAN PATENT APPLICATION

(11) **EP 1 111 807 A2**
(43) Date of publication of application: **27.06.2001**
(21) Application number: 00310513.7
(22) Date of filing: 27.11.2000
(51) Int. Cl.: H04B 3/23

(54) **Line card apparatus and method for echo cancellation**

(30) Priority: 03.12.1999 US 454382
(71) Applicant: LUCENT TECHNOLOGIES INC., Murray Hill, New Jersey 07974-0636 (US)
(72) Inventor: Posthuma, Carl Robert, Wheaton, Illinois 60187 (US); Stanley, Dorothy Voytko, Warrenville, Illinois 60555 (US)
(74) Representative: Buckley, Christopher Simon Thirsk

(57) **Abstract**

A line card apparatus having a communication path for receipt of a transmit analog signal and another communication path for receipt of a receive digital signal and transmission of an output digital signal, a digital-to-analog converter at the line card apparatus is coupled to the other communication path for converting the receive digital signal into a receive analog signal and a hybrid circuit couples the communication path to the other communication path resulting in an echo signal component from the receive analog signal in the transmit analog signal. An analog-to-digital converter circuit at the line card apparatus is coupled to the communication path in which the analog-to-digital converter circuit converts the transmit analog signal having an echo signal component into the output digital signal having a receive echo signal component and an echo canceller circuit at the line card apparatus coupled to the other communication path generating an echo cancel signal in response to the receive digital signal. A signal combiner coupled to the echo canceller combines the output digital signal with the echo cancel signal resulting in an output digital signal without the digital echo signal component in response to the receipt of the echo cancel signal and the output digital signal.

## Description

### BACKGROUND OF THE INVENTION

The present invention relates generally to telephonic communication systems and specifically to line interface circuits in a telephonic communication system.

In telephonic communication systems, two-wire and four-wire communication paths are commonly coupled by a hybrid circuit. Due to imperfect balancing of the hybrid circuit, a component of an incoming signal on the four-wire receive path, referred to as an echo signal, is inevitably but undesirably coupled to the transmit path. The echo signal is undesirable because it is objectionable to the user if it is large and has a long delay. Attenuation of the echo signal is referred to as echo return loss (ERL).

A communication path through a telecommunication system often requires the communication signal to pass through analog-to-digital converters and several digital signal processors (DSPs). Each DSP introduces additional delay as the digital signal progresses through the communication network. Signal delays are also introduced by routing the digital signal through different types of networks, such as asynchronous transfer mode (ATM) networks, Internet Protocol (IP) networks, bi-directional SONET ring networks and wireless networks that make up the communication system. The combination of signal delays introduced by the different types of networks and DSPs results in a delayed echo signal.

Currently in telephonic networks, echo signal reduction between switches over short distances (e.g. between class five or local offices) is achieved without echo canceller circuits. Additionally, this method of echo signal control or reduction is accomplished with the employment of a line card circuit having a hybrid circuit which attempts to balance the impedance of the circuit by choosing one of three possible impedance values. The echo signal may be further reduced by placing loss pads in a power control circuit. The problem with not having the signal go through an actual echo canceller circuit is that the attempted balancing of the hybrid circuit is not perfect, resulting in an echo signal component. Additionally, the ATM, IP, SONET, and wireless network connections require echo cancellation at the plain old telephone service (POTS) connection because of the increased delays associated with each of the networks.

Connections of greater distances (e.g. between toll offices) having greater delays traditionally use a line card circuit with the hybrid circuit and the power control circuit as described above, but also have actual echo canceller devices called 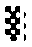 Echo Canceller Unit 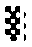 (ECU). The ECUs operate on the eight bit non-linear PCM signals between toll offices in order to reduce the echo signal. The line card circuit and ECU approach to echo cancellation results in an ERL greater than 45 dB.

Moreover, the problem with using the described approach throughout the telephonic network is the cost of the ECUs and limits on system performance. A significant cost of an ECU is the amount of memory required for echo cancellation. Enough memory must be present in an ECU to cancel tail delays (echo signal delay) between 32 ms and 128 ms. The amount of memory and cost of the ECU increases with an increase in the length of echo signal delay required to be canceled. The echo cancellation in the ECU is also occurring in the non-linear 8-bit signal stream resulting in less precise echo cancellation. Additionally, another problem is that the centralization of the ECU between toll offices in the telephonic network increases the complexity of the network and the impact of an ECU failure.

Accordingly, there is a need in the art for an echo cancellation system and method that lowers system complexity and cost, while increasing system performance. Additionally, it is desirable to accommodate connections to other types of networks such as ATM, IP, SONET and wireless networks that require echo cancellation at the POTS connection.

### SUMMARY OF THE INVENTION

The present invention is directed to a method and apparatus of echo cancellation in a communication system that resolves the problems of signals not going through actual echo canceller circuits, the impact of echo canceller failures, and the cost of echo control while accommodating the echo cancellation required by other types of networks (i.e. ATM, wireless, IP, etc 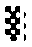 ). The communication system comprises telephonic infrastructure devices with line interface circuits for transmitting and receiving analog signals from telephonic devices, such as telephones.

Additionally, the analog signal having an analog echo signal component is converted to a linear digital signal having a digital echo signal component. An echo canceller circuit located in the line interface circuit then receives the linear PCM digital signal and reduces the digital echo signal component resulting in a clearer communication signal routing through the communication system.

### BRIEF DESCRIPTION OF THE DRAWINGS

These and other features, aspects, and advantages of the present invention will become better understood with reference to the following description of the preferred embodiment and drawings, in which:
Fig. 1 shows a communication system having telephonic switches connected by a communication link, containing line interface circuits with echo canceller circuits, connected to telephonic devices in accordance with a preferred embodiment of the invention;
Fig. 2 shows a signal diagram of a line interface circuit with an echo canceller circuit, having connections to a telephonic device and a time slot interchange in accordance with a preferred embodiment of the invention;
Fig. 3 is a detailed signal diagram of the signal flow in a line interface circuit with an echo canceller and a hybrid/battery feed circuit in accordance with a preferred embodiment of the invention;
Fig. 4 shows a block diagram of a line interface circuit with an echo canceller circuit, having connections to a telephonic device and a time slot interchange in accordance with a preferred embodiment of the invention; and
Fig. 5 is a flow chart of a method of echo control at a line interface circuit in accordance with a preferred embodiment of the present invention.

### DETAILED DESCRIPTION

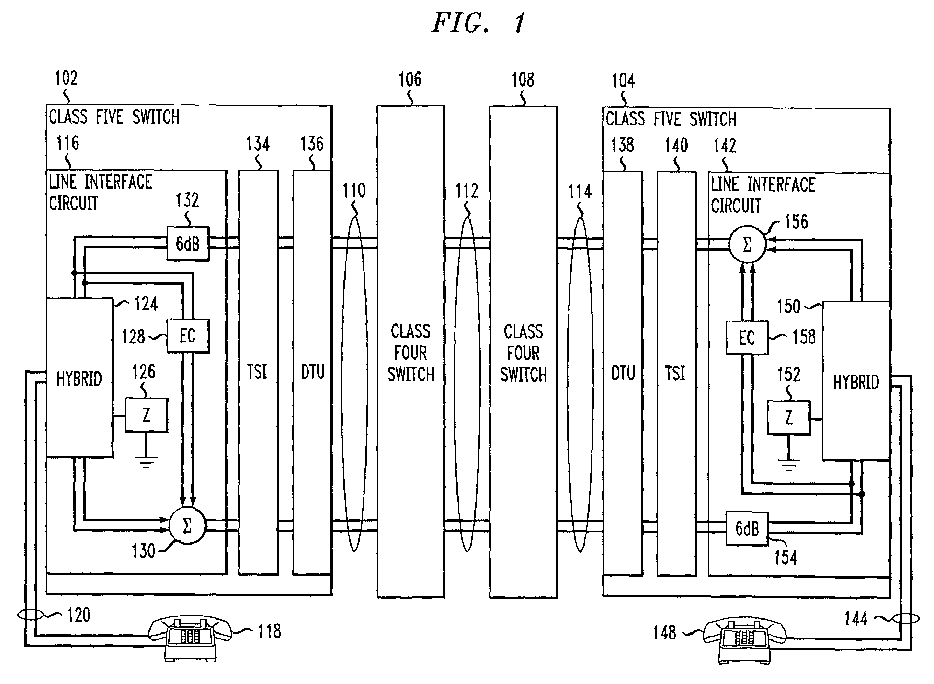

Referring now to Fig. 1, a communication system 100 having two class five type telephonic switches 102, 104 and two class four type telephonic switches 106, 108 is shown. A Class five type telephonic switch is an example of telephonic infrastructure equipment that includes, but is not limited to telephonic switches, intelligent network (IN) devices and PBXs. The class five type telephonic switch 102 (hereafter referred to as the telephonic switch) is coupled to the class four type telephonic switch 106 by a communication link 110 via a digital trunk unit (DTU) 136. The class four type telephonic switches 106, 108 are coupled by a PCM link 112. The other class four telephonic switch 108 is coupled to the other class five type telephonic switch 104 (hereafter referred to as the other telephonic switch) by another communication link 114 via another DTU 138. Each DTU 136, 138 is coupled to a respective time slot interface (TSI) 134, 140. The telephonic switch 102 has a line interface circuit 116 coupled to a telephonic device 118 by an analog communication path 120 commonly called a subscriber loop. The line interface circuit 116 utilizes the analog communication path 120 for receiving a receive analog signal and transmitting a transmit analog signal. A digital communication path 122 is coupled to the line interface circuit 116 and the TSI 134 for receipt of a receive digital signal and transmission of an transmit digital signal. The line interface circuit 116 has a hybrid balance circuit 124 which is coupled to the analog communication path 120, balance impedance Z 126, an echo canceller (EC) circuit 128, a signal combiner 130 and a six dB pad 132.

Similarly, telephonic switch 104 has similar elements and connections: Another DTU 138, another TSI 140, another line interface circuit 142, and another analog communication path 144 coupled to another telephonic device 148. The other line interface circuit 142 contains a hybrid circuit 150 coupled to the other analog communication path 144, another balance impedance Z 152, another six dB pad 154, another signal combiner 156, and another echo canceller (EC) circuit 158.

A call is set up between telephonic device 118 and the other telephonic device 148. An analog signal is transmitted from the other telephonic device 148 over the other two wire analog communication path 144 to the other hybrid circuit 150 located on the other line interface circuit 142 contained in the other telephonic switch 104. The signal is transmitted as a digital signal across the communication network 100 to telephonic switch 102. Telephonic switch 102 receives the non-linear (i.e. Mu-law or A-law) PCM signal at the DTU 136. The TSI 134 routes the receive signal to the line interface circuit 116 via the four wire digital communication path. The signal strength on the receive wire pair is reduced six dB by the six dB pad 132. The signal is then sent to the hybrid circuit 124 and EC 128. Unlike the switchable impedance loads known in the prior art, the hybrid circuit 124 has only one impedance load Z 126 to balance the impedance of the analog communication path 120. Because the single impedance load Z 126 is only an approximation of the impedance required to balance the circuit, an echo signal component of the received signal will be present in the transmit signal.

To cancel the echo signal component in the transmit signal, the EC 128 generates an echo cancel signal from the signal received from the other telephonic device 148. The echo cancel signal is subtracted from the transmit signal by the signal combiner 130 and results in a new transmit signal. The new transmit signal is then transmitted across the communication network 100 to the other telephonic device 148.

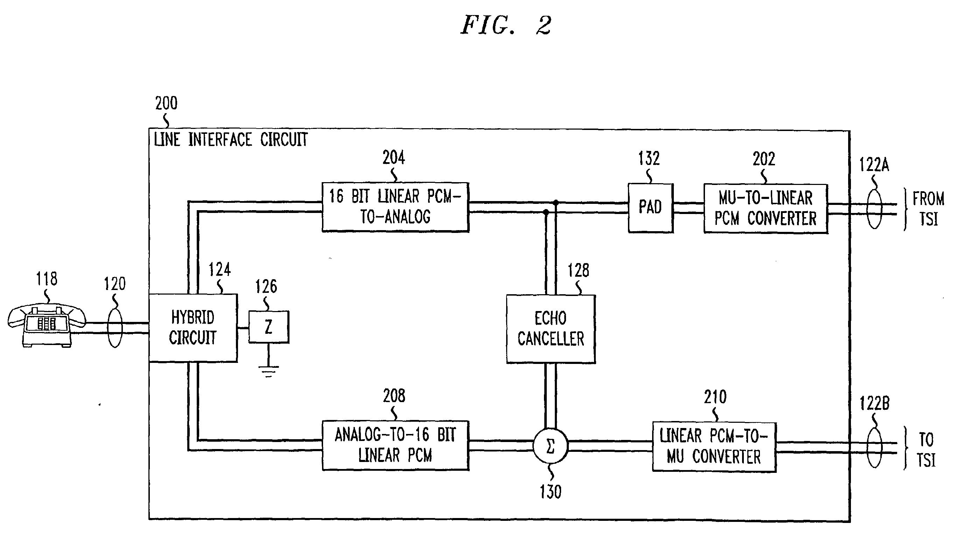

Turning to Fig. 2, a signal diagram of a line interface circuit 200 with an EC circuit 128, having connections to a telephonic device 118 and a TSI is shown. A non-linear Mu-law encoded PCM signal is received from TSI 134, Fig. 1, via two wires 122A, Fig. 2, of the four wire pair 122, Fig. 1. The received signal is converted into a 16 bit linearPCM signal by the Mu-law-to-linear PCM converter 202, Fig. 2. The resulting digital linear signal is reduced in power by a pad (a pad is a device inserted into a circuit to introduce signal loss) 132. The signal from the pad 132 is sent to the 16 bit linear PCM-to-analog converter 204 and to the EC circuit 128. The linear PCM-to-analog converter 204 converts the linear digital signal into an analog signal for transmission through the hybrid circuit 124 to telephonic device 118. The hybrid circuit 124 is coupled to an impedance load Z 126 for balancing the impedance of the analog communication path 120. Because the impedance between the impedance load Z 126 and the analog communication path 120 do not match, an echo signal is created in the transmission path.

The transmitted signal for telephonic device 118 is received at the hybrid circuit 124 and converted from a two wire analog communication path 120 to a four wire communication path. The transmit signal and the received echo signal component are converted from an analog signal to a 16 bit linear PCM transmit signal by the analog-to-linear PCM converter 208. The 16 bit linear PCM transmit signal and received echo signal are then combined with an echo cancel signal from the EC circuit 128 by the signal combiner 130. The echo cancel signal from the EC circuit 128 is derived from the 16 bit linear PCM receive signal.

The resulting transmit signal from the combiner 130 is converted from the 16 bit linear PCM signal to a non-linear Mu-law digital signal by the 16 bit linear PCM-to-Mu-law converter 210. The converted transmit signal is then sent to the TSI 134, Fig. 1, via the transmit pair 122B, Fig 2, of the four wire digital communication path 122, Fig. 1. In an alternate embodiment A-law non-linear encoding may replace Mu-law non-linear encoding in the above description.

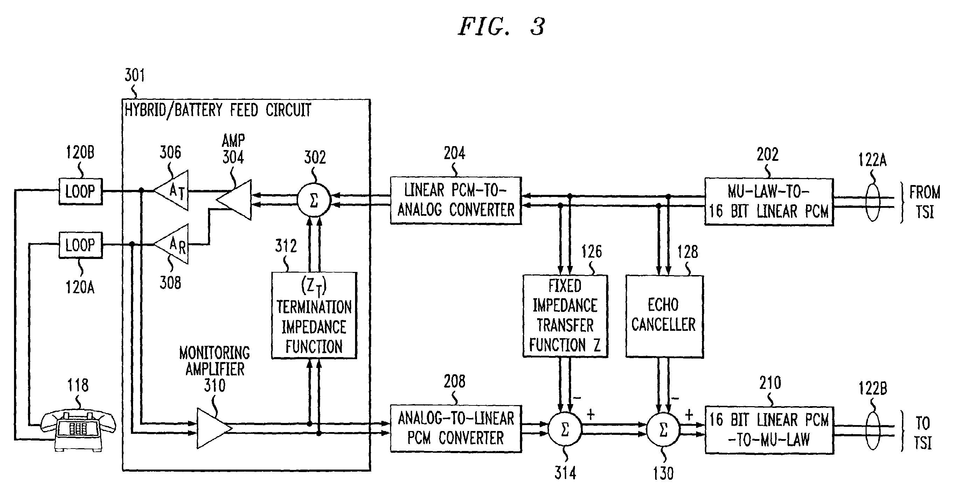

In Fig. 3, a detailed signal diagram of the signal flow in a line interface circuit with an EC circuit 128 and a hybrid/battery feed circuit 301 is shown. A non-linear digital Mu-law PCM receive signal is received from TSI 134, Fig. 1, at the Mu-law-to-linear PCM converter 202, Fig. 3 via the receive pair of wires 122A and converted to a 16 bit digital linear PCM receive signal. The linear PCM receive signal is then sent to the EC circuit 128, the fixed impedance transfer function 126, and the linear PCM-to-analog converter 204.

The linear PCM-to-analog converter 204 converts the digital receive signal into an analog signal. The analog signal is then sent to the hybrid/battery feed circuit 301 having a signal combiner 302 for combining the analog signal with a signal from the termination impedance function (Zₜ) 312. The termination signal is for terminating the known impedance of the network (typically 600 ohm or 900 ohm). The resulting analog receive signal from the combiner 302 is amplified by amplifier 304 and converted to a two wire connection with a tip amplifier (Aₜ) 306 and a ring amplifier (Aᵣ) 308. The signal from the tip amplifier 306 and the ring amplifier 308 are sent via the two wire subscriber loop 120A, 120B (analog communication path 120, Fig. 1) to the telephonic device 118, Fig. 2.

The telephonic device 118 also generates an analog transmit signal that is received by the hybrid/battery feed circuit 301. The analog transmit signal is processed by the monitoring amplifier 310 and sent to the termination impedance function 312 and the analog-to-linear PCM converter 208. The resulting linear digital PCM signal is combined with the signal from the fixed impedance transfer function 126 by signal combiner 314. The transmit signal is then combined with an echo cancel signal from the EC circuit 128 by the signal combiner 130. The echo cancel signal is derived by the EC circuit 128 from the 16 bit digital linear PCM receive signal. The transmit linear digital signal is sent from the signal combiner 130 to the 16 bit linear PCM-to-Mu law converter 210. The converter 210 converts the transmit signal into a non-linear Mu-law PCM signal and sends it to the TSI 134, Fig. 1, via the transmit pair 122B, Fig. 3 of the digital communication path 122. In an alternate embodiment, the fixed impedance transfer function can take place in the analog domain.

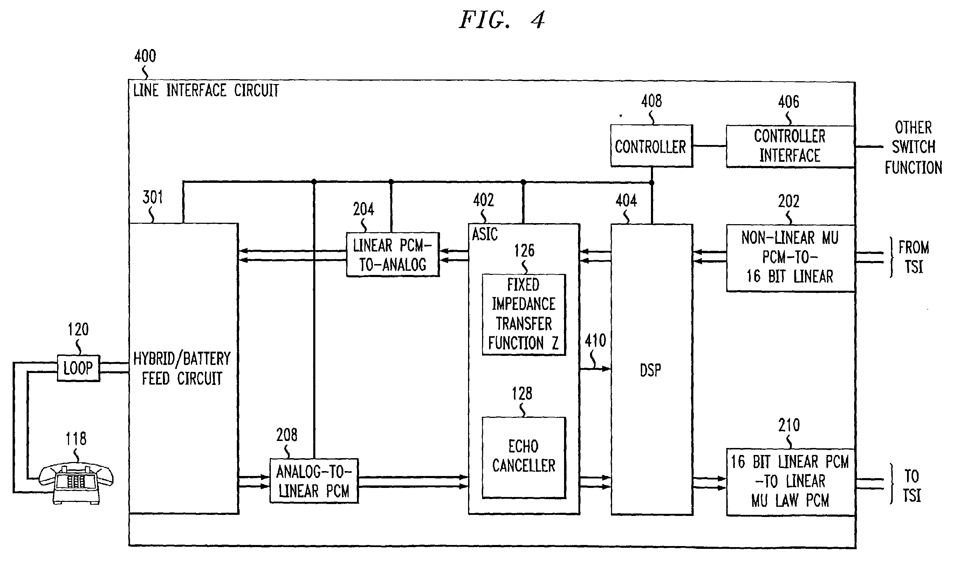

Referring to Fig. 4, a block diagram of a line interface circuit 400 with an EC circuit 128, having connections to a telephonic device 118 and a TSI 134, Fig. 1, is shown. The telephonic device 118, Fig. 4 is preferably a telephone that is connected to the line interface circuit 400 by an analog communication path (two wire subscriber loop) 120 at a hybrid/battery feed circuit 301. A linear PCM-to-analog converter 204 is coupled to the hybrid/battery feed circuit 301 and an application specific integrated circuit (ASIC) 402. An analog-to-linear PCM converter 208 is also coupled to the hybrid/battery feed circuit 301 and ASIC 402. The ASIC 402 implements the fixed impedance transfer function 126 and the EC 128, and is coupled to a digital signal processor (DSP) 404. The DSP 404 is coupled to the ASIC 402, a Mu-law-to-linear PCM converter 202, and a linear PCM-to-Mu-law converter 210. A controller 408 is also coupled to a controller interface 406, the DSP 404, ASIC 402, the linear PCM-to-analog converter 204, the analog-to-linear PCM converter 208, and the hybrid/battery feed circuit 301.

When a telephonic connection to telephonic device 118 has been established, a receive signal is received from the TSI 134, Fig. 1, at the Mu-law-to-linear PCM converter 202, Fig. 4. The received signal is converted into a 16 bit digital linear signal and then processed by the DSP 404. The DSP 404 is able to receive signal parameters from the ASIC 402 and in response to the signal parameters modifies the receive signal and transmit signal. The signal parameters from the ASIC 402 are derived from processing of the receive signal and the transmit signal. The ASIC 402 communicates with the DSP 404 via a communication bus 410. Examples of some of the signal parameters that are selectively collected and sent by the ASIC 402 over the communication bus 410 to the DSP 404 are: Transmit noise, receive noise, reflected signal, transmit maximum level, receive maximum level, transmit level, receive level, transmit base, receive base, transmit treble, receive treble, and on-off hook status.

The parameters are used by the controller 408 to modify the signal resulting in a signal that is more pleasing to the customer. The parameters in conjunction with input from the controller 408 may selectively increase the level for people that need extra amplification or extra high frequency amplification. The parameters can also be used to amplify the signal in the presence of noisy environments for either the near end telephonic device 118 or far end other telephonic device 148. Examples of noisy environments are: airports, noisy factories or automobiles. Additional, amplification and frequency shaping may selectively be used to remove the need for load coils on long subscriber loops.

The controller 408 may selectively receive instructions from a central database containing customer preference parameters for a selected circuit to boost the analog signal level, lower the analog signal level, make the analog signal louder in the presence of background noise, change the loudness or loudness in certain frequency ranges, such as base or treble, and enable long subscriber loops to operate without load coils. The controller 408 is also capable of receiving customer preference parameters or instructions from a customer. For example, the customer may selectively push 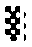 * L 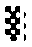 for louder, 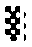 * S 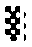 for softer, 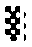 * L B 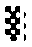 for more base, 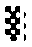 * S B 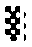 for less base, 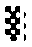 * L T 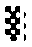 for more treble, 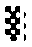 * S T 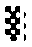 for less treble. A touch tone detector in the ASIC 402 or DSP 404 may selectively communicate the customer preference parameters or instructions from the customer to the controller 408. Together the signal parameters from the ASIC 402 and the customer preference parameters are used to modify the receive signal and/or the transmit signal.

The receive signal is then sent to the ASIC 402 from the DSP 404. The ASIC 402 generates an echo cancel signal at EC 128 from the receive signal. The receive signal is then converted into an analog signal by the linear PCM-to-analog converter 204. The analog signal is then transferred from a four wire communication path to a two wire subscriber loop 120 (analog communication path) by the hybrid/battery feed circuit 301.

The transferring of the signal from the four wire communication path to the two wire communication path 120 results in an echo signal component, or more precisely a receive analog echo signal component, that is combined with the transmit signal from the telephonic device 118. The analog transmit signal containing the analog echo signal component is converted into a 16 bit digital linear PCM signal 208 by the analog-to-linear PCM converter 208. The ASIC 402 receives the linear transmit signal and reduces the echo via the fixed impedance transfer function 126. The echo signal component in the transmit signal is then canceled by the cancel signal from the EC 128 being combined with the transmit signal having an echo signal component. The resulting transmit signal is then sent to the DSP 404 for further processing. The transmit digital signal from the DSP 404 is then converted into a non-linear PCM transmit signal by the linear PCM-to-Mu-law converter 210 and sent to the TSI 134, Fig. 1.

The controller 408 on the line card 400 is able to control the processing of signals by communicating with the DSP 404, ASIC 402, converters 204, 208 and the hybrid/battery feed circuit 301. The controller 408 is also able to communication with other telephonic switch functions via the controller interface 406, Fig. 4. In addition to controlling, the controller 408 also monitors the signal processing and notifies the other switch functions via the controller interface 406, Fig. 2, when a fault is detected.

Echo cancellation occurring at the line card rather than large ECUs reduces the cost and complexity of the network. Large expense ECU apparatus no longer has to be placed in networks freeing space, physical resources, and man power. Line cards with echo canceller can easily replace current line cards without additional space, resource, or man power demands. The risk and impact of an ECU failure is eliminated because if an EC circuit on a line card fails, only the circuits supported by that line card are affected. The placement of the EC on the line card also solves the problem of other types of networks requiring echo cancellation at the terminating connection. The system performance is increased because the echo cancellation can occur in a 16 bit or larger linear digital signal as opposed to an 8-bit non-linear signal allowing greater precision in echo cancellation. Additionally, less memory is required for a 4-8ms tail verses a 64-128ms tail resulting in less expensive echo cancellation.

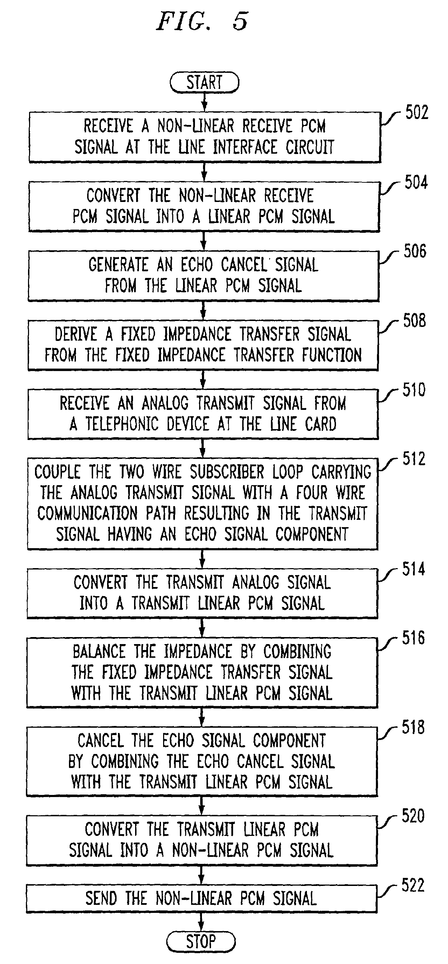

In Fig. 5, a flow chart of a method of echo control at a line interface circuit is shown. A non-linear PCM receive signal is received at the line card in step 502. In step 504, the non-linear receive PCM signal is converted into a linear PCM signal by a converter 202, Fig. 4. The linear PCM signal from step 504, Fig. 5 is then sent to the EC 128, Fig. 4, where an echo cancel signal is derived in step 506, Fig. 5. Additionally, the linear PCM signal from step 504 is sent to a fixed impedance transfer function 126, Fig. 4, in order to generate a fixed impedance transfer signal, step 508, Fig. 5. In step 510, the line interface circuit 400, Fig. 4, receives an analog transmit signal from the telephonic device 118. The analog transmit signal is transferred from a two wire subscriber loop to a four wire communication path, step 512, Fig. 5, by a hybrid/battery feed circuit 301, Fig. 4. A mismatch of impedance between the two wire subscriber loop communication path and the four wire communication path, results in an echo signal component being introduced from the receive signal into the transmit analog signal.

The analog transmit signal having the echo signal component is converted into a 16 bit digital linear PCM transmit signal having a digital echo signal component by the analog-to-linear PCM converter 208 in step 514, Fig. 5. In step 516, the linear PCM transmit signal is combined with the fixed impedance transfer signal from the fixed impedance transfer function 126, Fig. 4. The linear PCM transmit signal, in step 518, Fig. 5, is combined with the cancel echo signal from the EC 128, Fig. 4, removing the echo signal component.

In step 520, Fig. 5, the linear PCM transmit signal is converted into a non-liner PCM transmit signal by a linear PCM-to-Mu law converter 210, Fig. 4. The non-linear PCM signal is transmitted to the TSI 134, Fig. 1, step 522, Fig. 5.

While the specification in this invention is described in relation to certain implementations or embodiments, many details are set forth for the purpose of illustration. Thus, the foregoing merely illustrates the principles of the invention. For example, this invention may have other specific forms without departing from its spirit or essential characteristics. The described arrangements are illustrative and not restrictive. To those skilled in the art, the invention is susceptible to additional implementations or embodiments and certain of the details described in this application can be varied considerably without departing from the basic principles of the invention.

## Claims

1. A method of echo cancellation in a communication system having a telephonic infrastructure device with a line interface circuit for receiving a transmit analog signal and a digital receive signal and transmitting a receive analog signal and a transmit digital signal in the communication system comprising the steps of:
placing an echo canceller circuit in the line interface circuit;
converting the transmit analog signal having an analog echo signal component to the transmit digital signal having a digital echo signal component in response to receiving the transmit analog signal at the line interface circuit;
generating an echo cancel signal in response to the echo canceller circuit receiving the digital receive signal; and
combining the transmit digital signal with the echo cancel signal resulting in the transmit digital signal without the digital echo signal component.

2. The method of echo cancellation of claim 1 including the steps of deriving a signal parameter from at least one signal selected from a group of signals, and
modifying the at least one signal selected from the group of signals.

3. The method of echo cancellation of claim 2 in which the step of deriving further comprises deriving at least one signal parameter selected from a group of signal parameters of at least one of transmit noise, receive noise, reflected signal, transmit maximum level, receive maximum level, transmit level, receive level, transmit base, receive base, transmit treble, receive treble and on-off hook status.

4. The method of echo cancellation of claim 2 in which the step of deriving further comprises the step of receiving in the transmit analog signal the customer preference parameter.

5. The method of echo cancellation of claim 2 in which the step of deriving further comprises the step of receiving in the receive digital signal the customer preference parameter.

6. The method of echo cancellation of claim 4 or 5 in which the step of receiving further comprises the step of accessing a customer preference parameter to boost a signal level of the at least one signal.

7. The method of echo cancellation of claim 4 or 5 in which the step of receiving further comprises the step of accessing a customer preference parameter to lower a signal level of the at least one signal.

8. The method of echo cancellation of claim4 or 5 in which the step of receiving further comprises the step of accessing a customer preference parameter to make the at least one signal louder when a background noise is present.

9. The method of echo cancellation of claim4 or 5 in which the step of receiving further comprises the step of accessing a customer preference parameter to alter a treble level of the at least one signal.

10. The method of echo cancellation of claim 4 or 5 in which the step of receiving further comprises the step of accessing a customer preference parameter to alter a base level of the at least one signal.

11. The method of echo cancellation of claim 2 including the steps of accessing a database of at least one customer preference parameter,
reading the at least one customer preference parameter from the database, and
applying the at least one customer preference parameter to the at least one signal.

12. The method of echo cancellation of claim 11 in which the step of reading further comprises the step of accessing a customer preference parameter to boost a signal level of the at least one signal.

13. The method of echo cancellation of claim 11 in which the step of reading further comprises the step of accessing a customer preference parameter to lower a signal level of the at least one signal.

14. The method of echo cancellation of claim 11 in which the step of reading further comprises the step of accessing a customer preference parameter to make the at least one signal louder when a background noise is present.

15. The method of echo cancellation of claim 11 in which the step of reading further comprises the step of accessing a customer preference parameter to alter a treble level of the at least one signal.

16. The method of echo cancellation of claim¹¹ in which the step of reading further comprises the step of accessing a customer preference parameter to alter a base level of the at least one signal.

17. The method of echo cancellation of claim 11 in which the step of reading further comprises the step of accessing a customer preference parameter to provide transmission of the transmit analog signal and the receive analog signal without a load coil.

18. The method of echo cancellation of claim 1 including the steps of coupling an analog communication path having a path impedance to another communication path through a hybrid circuit having a fixed impedance on the line interface circuit, and
balancing the fixed impedance with the path impedance of the analog communication path in the hybrid circuit.

19. The method of echo cancellation of claim 1 where the step of converting further includes the steps of getting the transmit analog signal at an analog-to-digital converter, and
transforming the transmit analog signal into the transmit digital signal in response to the analog-to-digital converter receiving the transmit analog signal.

20. The method of echo cancellation of claim 1 including the step of receiving the transmit analog signal at the line interface circuit from a telephonic device.

21. The method of echo cancellation of claim 1 including the step of receiving the receive digital signal from an asynchronous transfer mode (ATM) network.

22. The method of echo cancellation of claim 1 including the step of receiving the receive digital signal from a wireless network.

23. The method of echo cancellation of claim 1 including the step of receiving the receive digital signal from an Internet Protocol (IP) network.

24. A line card apparatus coupled to an analog communication path for receipt of a transmit analog signal and a digital communication path for receipt of a receive digital and transmission of a transmit digital signal comprising:
means for converting the transmit analog signal having a receive analog echo signal component into the transmit digital signal having a receive digital echo signal component; and
means at the line card for cancelling the receive digital echo signal component of the transmit digital signal in response to receiving the receive digital signal at the line card.

25. The apparatus of claim 24 in which the means for cancelling includes means for generating an echo cancel signal from the receive digital signal and a estimated transfer function echo path, and
means for subtracting the generated echo cancel signal from the output digital signal to cancel the receive digital echo signal component.

26. A line card apparatus having a communication path for receipt of a transmit analog signal and another communication path for receipt of a receive digital signal and transmission of an output digital signal comprising:
a digital-to-analog converter at the line card apparatus coupled to the other communication path for converting the receive digital signal into a receive analog signal;
a hybrid circuit for coupling the communication path to the other communication path resulting in an echo signal component from the receive analog signal in the transmit analog signal;
an analog-to-digital converter at the line card apparatus coupled to the communication path in which the analog-to-digital converter converts the transmit analog signal having the echo signal component into the output digital signal having the echo signal component;
an echo canceller circuit at the line card apparatus coupled to the other communication path generating an echo cancel signal in response to the echo canceller circuit receiving the receive digital signal; and
a signal combiner coupled to the echo canceller combining the output digital signal with the echo cancel signal resulting in the output digital signal without the digital echo signal component in response to receipt of the echo cancel signal and the output digital signal.

27. The line card apparatus of claim 26 in which the hybrid circuit further comprises a fixed impedance for approximating the impedance of the communication path.

28. The line card apparatus of claim 26 including means for decreasing the output analog signal strength between 0 dB and 13 dB.

29. The line card apparatus of claim 26 in which the transmit analog signal is a telephonic signal.

30. The line card apparatus of claim 26 in which the receive digital signal is an Asynchronous Transfer Mode (ATM) signal.

31. The line card apparatus of claim 26 in which the receive digital signal is a non-linear digital signal from a wireless network.

32. The line card apparatus of claim 26 in which the receive digital signal is an Internet Protocol (IP) signal.
